# EUROPEAN PATENT APPLICATION

(11) **EP 4 060 469 A1**
(43) Date of publication of application: **21.09.2022**
(21) Application number: 21190329.9
(22) Date of filing: 09.08.2021
(51) Int. Cl.: G06F 3/0482, G06F 3/04847, H04N 1/00

(54) **INFORMATION PROCESSING APPARATUS AND INFORMATION PROCESSING PROGRAM**

(30) Priority: 16.03.2021 JP 2021042774
(71) Applicant: Fujifilm Business Innovation Corp., Tokyo 107-0052 (JP)
(72) Inventor: OHASHI, Jun, Kanagawa, 220-8668 (JP)
(74) Representative: Parker, Andrew James

(57) **Abstract**

An information processing apparatus includes a processor configured to receive, from a first user, a change instruction to change a setting content of a shared operation element, the shared operation element being an operation element configured to process data and shared by plural users including the first user and a second user different from the first user, and, in a case where the second user uses the shared operation element after receiving the change instruction from the first user, notify the second user of a changed setting content of the shared operation element.

## Description

### BACKGROUND

### Technical Field

The present invention relates to an information processing apparatus and an information processing program.

### Related Art

JP-A-2010-250451 discloses a tool management system including a tool PC that executes a tool and a tool providing center that distributes the tool, in which the tool providing center holds an improvement request received from each tool PC in a tool providing DB, specifies the tool PC based on correspondence information between a change point of the tool and the improvement request from each tool PC held in the tool providing DB when the tool is changed, and distributes a changed tool to the specified tool PC.

### SUMMARY

Sharing of operation elements for processing data by plural users has been commonly performed. Hereinafter, such an operation element is referred to as a shared operation element. A specific command is associated with the shared operation element, and plural users input the command associated with the shared operation element by operating the shared operation element.

It is conceivable that each user is allowed to change a setting content of the shared operation element (for example, a content of the command associated with the shared operation element). In addition, after the setting content of the shared operation element is changed by a first user, it is conceivable that the second user, different from the first user, using the shared operation element is allowed to select whether to accept a changed content of the shared operation element made by the first user, in other words, whether to reflect the changed content made by the first user in a shared operation element of the second user. In a case where the second user receives the changed content made by the first user, the setting content of the shared operation element of the second user becomes a content after the change made by the first user. In a case where the second user does not accept the changed content made by the first user, the setting content of the shared operation element of the second user becomes the content before the change made by the first user.

Here, in a case where the first user changes the setting content of the shared operation element, the second user would like to grasp what kind of content change is made to the shared operation element and then to determine whether to reflect the change in the shared operation element used by the second user.

Aspects of non-limiting embodiments of the present disclosure relate to, in a case where the shared operation element for processing data is shared by plural users, enabling a second user different from a first user to grasp the setting content of the shared operation element changed by the first user.
[1] According to an aspect of the present disclosure, there is provided an information processing apparatus, including: a processor configured to receive, from a first user, a change instruction to change a setting content of a shared operation element, the shared operation element being an operation element configured to process data and shared by plural users including the first user and a second user different from the first user, and, in a case where the second user uses the shared operation element after receiving the change instruction from the first user, notify the second user of a changed setting content of the shared operation element.
[2] In the information processing apparatus according to [1], the processor may be configured to receive, from the first user, a change reason why the setting content of the shared operation element is changed, and notify the second user of the change reason together with the changed setting content of the shared operation element.
[3] In the information processing apparatus according to [1] or [2], the processor may be configured to notify the second user of an effect of change of the setting content of the shared operation element together with the changed setting content of the shared operation element.
[4] In the information processing apparatus according to any one of [1] to [3], when the second user uses the shared operation element and in a case where a setting content indicated by first setting information indicating the changed setting content of the shared operation element by the first user and a setting content indicated by second setting information indicating a setting content of the shared operation element at a time point when the second user uses the shared operation element immediately before are different from each other, the processor may be configured to notify the second user of the setting content indicated by the first setting information based on the first information and the second information.
[5] In the information processing apparatus according to any one of [1] to [4], when the second user uses the shared operation element after receiving the change instruction to change the setting content of the shared operation element from the first user, the processor may be configured to receive a selection as to whether to reflect the setting content of the shared operation element changed by the first user in a setting of the shared operation element of the second user.
[6] In the information processing apparatus according to [1], the processor may be configured to generate a personal operation element dedicated to the second user by generating a duplicated shared operation element from the shared operation element and changing a setting content of the duplicated shared operation element according to a change instruction from the second user.
[7] In the information processing apparatus according to [6], the processor may be configured to notify the second user, in response to the shared operation element being selected to use by the second user after the personal operation element dedicated to the second user is generated, that the personal operation element is generated.
[8] In the information processing apparatus according to [6], in a case where the setting content of the shared operation element changed by the first user is not reflected in a setting of the shared operation element of the second user, the processor may be configured to notify the first user, when the first user uses the shared operation element again, that a personal operation element is generatable.
[9] According to another aspect of the present disclosure, there is provided an information processing program causing a computer to execute a process, the process including: receiving, from a first user, a change instruction to change a setting content of a shared operation element, a shared operation element being an operation element configured to process data and shared by plural users including the first user and a second user different from the first user, and, in a case where the second user uses the shared operation element after receiving the change instruction from the first user, notify the second user of a changed setting content of the shared operation element.

According to [1] or [9], the second user different from the first user may grasp the setting content of the shared operation element changed by the first user in a case where the shared operation element for processing data is shared by plural users.

According to [2], the second user may grasp the reason why the first user changes the setting content of the shared operation element.

According to [3], the second user may grasp the effect of changing the setting content of the shared operation element by the first user.

According to [4], when the first setting information and the second setting information are the same, unnecessary notification to the second user may be prevented.

According to [5], the second user may determine whether to reflect the setting content in the setting of the shared operation element based on the setting content of the shared operation element changed by the first user.

According to [6], the second user may generate the personal operation element dedicated to the second user.

According to [7], it may be possible to prevent the second user from using the shared operation element even though the personal operation element of the second user based on the shared operation element is generated.

According to [8], in a case where the setting content of the shared operation element set by the first user is not accepted by the second user, it may be possible to notify the first user that the personal operation element is generatable.

### BRIEF DESCRIPTION OF DRAWINGS

Exemplary embodiment(s) of the present invention will be described in detail based on the following figures, wherein:
Fig. 1 is a schematic configuration diagram of an information processing system according to an exemplary embodiment;
Fig. 2 is a schematic configuration diagram of a user terminal;
Fig. 3 is a schematic configuration diagram of a document management server;
Fig. 4 is a diagram showing a display example of a shared operation button;
Fig. 5 is a diagram showing an example of a setting content change window;
Fig. 6 is a conceptual diagram showing a content of a button setting DB;
Fig. 7 is a diagram showing an example of a change method instruction window;
Fig. 8 is a diagram showing a display example of a personal operation button;
Fig. 9 is a diagram showing an example of a setting content change notification window;
Fig. 10 is a diagram showing an example of a reason input window;
Fig. 11 is a diagram showing a first example of a notification necessity confirmation window;
Fig. 12 is a diagram showing a second example of a notification necessity confirmation window;
Fig. 13 is a diagram showing an example of a personal operation button generation notification window; and
Fig. 14 is a flowchart showing a flow of a process of the document management server.

### DETAILED DESCRIPTION

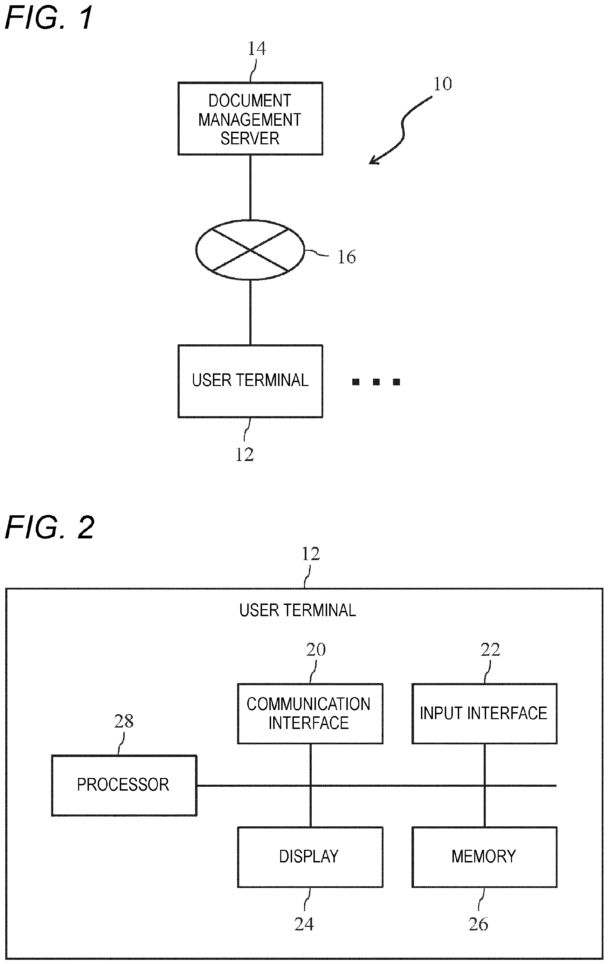

Fig. 1 is a schematic configuration diagram of an information processing system 10 according to a present exemplary embodiment. The information processing system 10 includes a user terminal 12 used by a user as a user, and a document management server 14 as an information processing apparatus. Although only one user terminal 12 is shown in Fig. 1, the information processing system 10 may include plural user terminals 12 used by plural users. The user terminal 12 and the document management server 14 are communicably connected to each other via a communication line 16 including, for example, an Internet line or a local area network (LAN). As will be described in detail later, the document management server 14 is a server that provides plural users who access the document management server 14 using the user terminal 12 with a shared operation element shared by the plural users.

In the present exemplary embodiment, the document management server 14 is a server that provides document management service to plural users. That is, in the present exemplary embodiment, the information processing system 10 is a document management system that manages an electronic document. The document management service is service for managing an electronic document sent from a user and providing the user with the electronic document managed in response to a request from the user. In the document management service, each user may operate (edit, store, transmit, or the like) the managed electronic document. The document management server 14 provides the above-described shared operation element to plural users while providing the document management service.

A server included in the information processing system 10 is not limited to the document management server 14. That is, the information processing system 10 is not limited to the document management system. The server included in the information processing system 10 may be any server as long as the shared operation element shared by plural users may be provided to the plural users.

Fig. 2 is a schematic configuration diagram of the user terminal 12. The user terminal 12 is, for example, a tablet terminal such as a personal computer or a smartphone, but the user terminal 12 may be any computer as long as the user terminal 12 performs functions described below.

A communication interface 20 includes, for example, a network adapter. The communication interface 20 performs a function of communicating with the document management server 14 via the communication line 16.

An input interface 22 includes, for example, a touch panel, a button, a mouse, or a keyboard. The input interface 22 is used to input a user instruction to the user terminal 12.

A display 24 includes, for example, a liquid crystal panel. Various display screens are displayed on the display 24. In particular, a shared operation element provided from the document management server 14 and a display screen related to the document management service (both will be described in detail later) are displayed on the display 24.

A memory 26 includes, for example, a hard disk drive (HDD), a solid state drive (SSD), an embedded multi-media card (eMMC), a read only memory (ROM), or a random access memory (RAM).

A processor 28 refers to hardware in a broad sense. Examples of the processor include at least one of general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). The processor 28 is broad enough to encompass one processor or plural processors in collaboration which are located physically apart from each other but may work cooperatively. The processor 28 controls each unit of the user terminal 12.

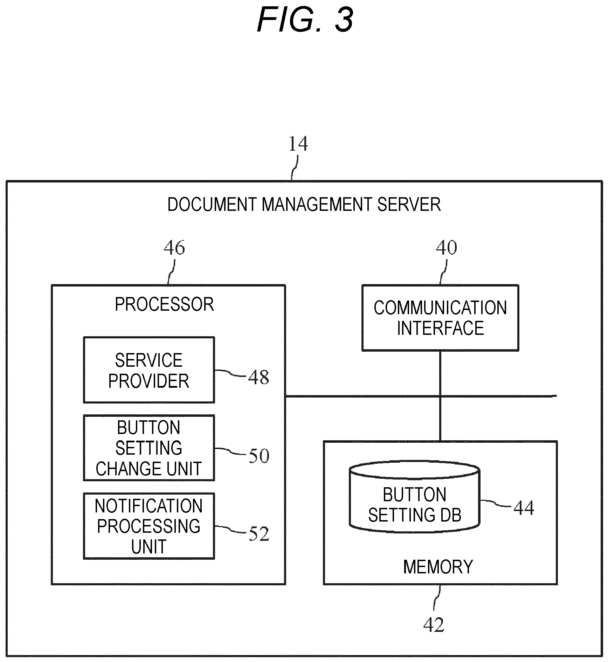

Fig. 3 is a schematic configuration diagram of the document management server 14. The document management server 14 includes, for example, a server computer. The document management server 14 may include plural computers. That is, functions performed by the document management server 14 described below may be implemented by cooperation of plural computers.

A communication interface 40 includes, for example, a network adapter. The communication interface 40 performs a function of communicating with the user terminal 12 via the communication line 16.

The memory 42 includes, for example, an HDD, an SSD, an eMMC, a ROM, a RAM, or the like. The memory 42 stores an information processing program for causing each unit of the document management server 14 to function. In addition, the memory 42 stores resources of the document management service provided to the user. Further, the memory 42 stores an electronic document managed by the document management service. As shown in Fig. 3, the memory 42 stores a button setting DB 44 in which a setting content of the shared operation element is stored. A content of the button setting DB 44 will be described later.

A processor 46 in the exemplary embodiment refers to hardware in a broad sense. Examples of the processor include general processors (e.g., CPU: Central Processing Unit), and dedicated processors (e.g., GPU: Graphics Processing Unit, ASIC: Application Specific Integrated Circuit, FPGA: Field Programmable Gate Array, and programmable logic device).

The term "processor" is broad enough to encompass one processor or plural processors in collaboration which are located physically apart from each other but may work cooperatively. The order of operations of the processor is not limited to one described in the exemplary embodiments above, and may be changed. The processor 46 functions as a service provider 48, a button setting change 50, and a notification processing unit 52 in accordance with an information processing program stored in the memory 42.

The service provider 48 authenticates a user registered in advance by an authentication process, and then provides document management service to the authenticated user. Specifically, the service provider 48 displays a screen related to the document management service on the display 24 of the user terminal 12 used by each user, and executes a process related to the electronic document (for example, editing and storing of the electronic document, transmission to the user terminal 12, and the like) in response to a command input from the user on the screen. In addition, the service provider 48 provides plural users with a shared operation element shared by the plural users. Therefore, it may be said that the service provider 48 is a shared operation element provider that provides the shared operation element to plural users.

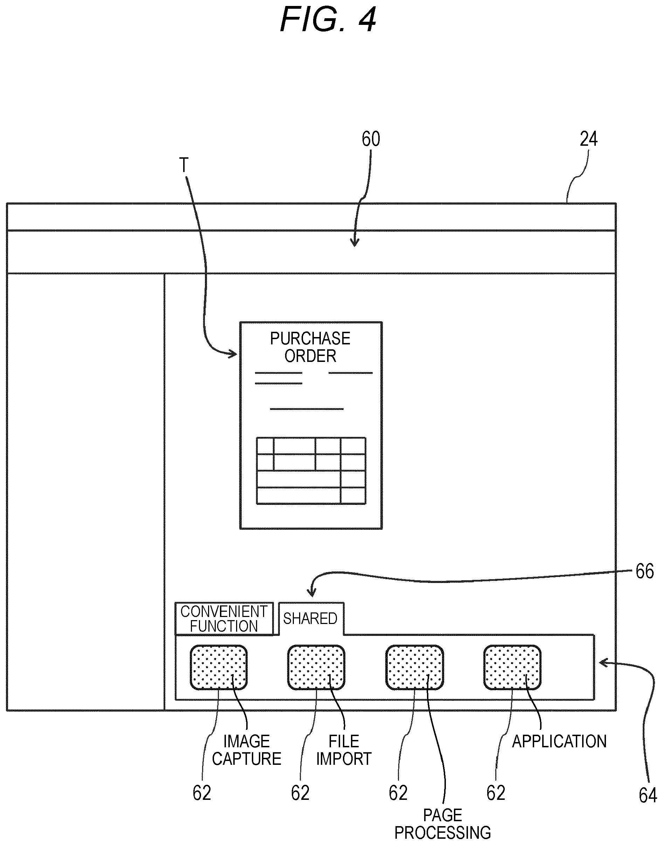

Fig. 4 is a diagram showing an example in which a document management window 60 related to the document management service and a shared operation button 62 as a shared operation element provided by the service provider 48 are displayed on the display 24 of the user terminal 12. A thumbnail T of an electronic document to be processed is displayed in the document management window 60. The user may display an edit screen of the electronic document corresponding to the thumbnail T by operating (for example, clicking) the thumbnail T.

The document management window 60 may be shared by plural users. In this case, a shared work region accessible from plural users is defined in the memory 42 of the document management server 14. When plural users access the shared work region from plural user terminals 12, the service provider 48 displays the document management window 60 having the same content on the display 24 of each of the plural user terminals 12. In the shared work region (the document management window 60 when viewed from each user), plural users may cooperate with each other to execute work related to the electronic document.

On the display 24, the shared operation button 62 is displayed together with the document management window 60. The shared operation button 62 is an operation element used by plural users to process data, and is shared by the plural users. Specifically, a command (in the present exemplary embodiment, a command related to an electronic document) is associated with the shared operation button 62 in advance, and when the user operates the shared operation button 62, a command corresponding to the shared operation button 62 is input to the service provider 48. The service provider 48 executes a process in accordance with the command. The service provider 48 may display plural types of shared operation buttons 62 (that is, plural shared operation buttons 62 associated with different commands) on the display 24.

Since the shared operation button 62 is shared by plural users, the same type of shared operation button 62 is displayed on each of the displays 24 of the user terminals 12 of the plural users who access the document management service.

As shown in Fig. 4, in the present exemplary embodiment, the shared operation button 62 is included in a shared toolbar 64 and displayed. The shared toolbar 64 may also be shared by plural users. In addition, in the present exemplary embodiment, the shared toolbar 64 is incorporated as one tab 66 among tabbed toolbars having plural tabs 66. Obviously, a display mode of the shared operation button 62 and the shared toolbar 64 is not limited thereto.

The button setting change unit 50 receives an instruction to change a setting content of the shared operation button 62 from each user, and changes the setting content of the shared operation button 62 in accordance with the change instruction. Changing the setting content of the shared operation button 62 means changing a content of a process related to a command associated with the shared operation button 62. Although not limited thereto, for example, when the shared operation button 62 corresponds to a command to process an electronic document, changing resolution of the processed electronic document is included in changing the setting content of the shared operation button 62.

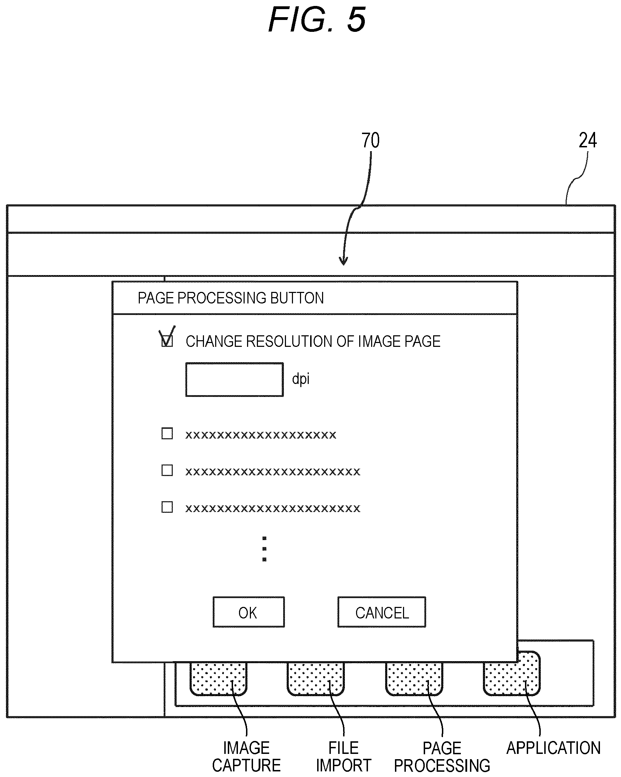

Specifically, when the user designates the shared operation button 62 and gives instructions to change the setting content of the shared operation button 62, the button setting change unit 50 displays a setting content change window 70 as shown in Fig. 5 on the display 24 of the user terminal 12 of the user. The user may transmit the instruction to change the setting content of the shared operation button 62 to the document management server 14 by inputting the changed setting content to the setting content change window 70 and operating an OK button.

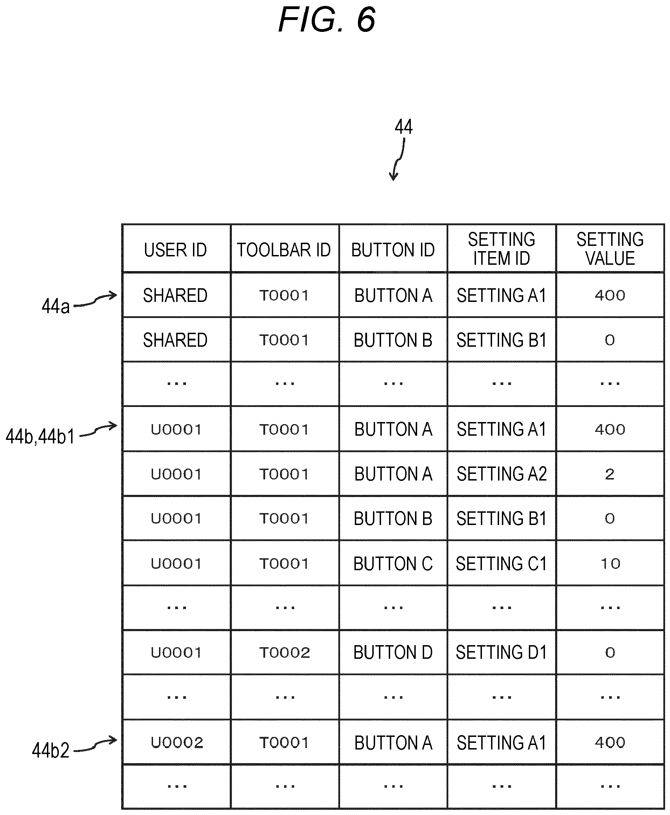

The setting content of the shared operation button 62 is stored in the button setting DB 44. When the shared operation button 62 is operated, the service provider 48 executes a process corresponding to the setting content indicated in the button setting DB 44. Fig. 6 is a conceptual diagram showing a content of the button setting DB 44. In the button setting DB 44, a button ID for uniquely identifying the shared operation button 62, a setting item ID for uniquely identifying a setting item (for example, the above-described resolution) of the shared operation button 62, and a setting value for the setting item are stored in association with each other. When the shared operation button 62 is included in the shared toolbar 64, a toolbar ID for uniquely identifying the shared toolbar 64 having the shared operation button 62 is further associated and stored in the button setting DB 44.

A user ID for identifying each user is further associated and stored in the button setting DB 44. In the present exemplary embodiment, the button setting DB 44 stores not only a shared setting 44a, which is the setting content shared by plural users, but also a user-specific setting 44b, which is the latest setting content of each user (for example, when each user displays the shared operation button 62 immediately before). In Fig. 5, in the present exemplary embodiment, the shared setting 44a is associated with "share" as a user ID, and the user-specific setting 44b is associated with a user ID indicating the user. When there are plural shared operation buttons 62, the shared setting 44a and the user-specific setting 44b for each shared operation button 62 are stored in the button setting DB 44.

For example, it is assumed that a user indicated by a user ID "U0001" (hereinafter, referred to as "first user" as a first user) changes the setting value of the setting item (hereinafter, referred to as "resolution") indicated by a setting item ID "setting A1" of the shared operation button 62 (hereinafter, referred to as "shared operation button A") indicated by a button ID "button A" from "400" to "300". In this case, the button setting change unit 50 changes a setting value of the resolution associated with the shared operation button A in the shared setting 44a and a user-specific setting 44b 1 of the first user from "400" to "300". On the other hand, the button setting change unit 50 maintains a resolution associated with a shared operation button A in a user-specific setting 44b2 of a user other than the first user, for example, a user indicated by a user ID "U0002" (hereinafter referred to as "second user" as a second user) at "400" (a value before change).

Since the shared operation button 62 is shared by plural users, when the setting content of the shared operation button 62 is changed by the first user, the setting content may be immediately reflected in the shared operation button 62 used by all other users including the second user. However, in some cases the second user does not prefer the changed content of the shared operation button 62 by the first user. In this case, the second user may want to use the shared operation button 62 with an original setting content (in other words, the setting content before the change by the first user) without reflecting the setting content of the shared operation button 62 of the first user in a shared operation button 62 of the second user. In the present exemplary embodiment, in such a case, the latest setting content of the shared operation button 62 of each user is stored in the button setting DB 44 so that the second user may return the shared operation button 62 to an original setting content.

In the above-described example, when the second user does not reflect the setting content of the shared operation button 62 of the first user in the shared operation button 62 of the second user, a state in which the resolution in the shared setting 44a and the user-specific setting 44b 1 of the first user is "300" and the resolution in the user-specific setting 44b2 of the second user is "400" is maintained in the button setting DB 44. When the shared operation button 62 is operated and the shared setting 44a and the user-specific setting 44b of the user who performs the operation are different from each other with respect to the shared operation button 62, the service provider 48 executes a process corresponding to the setting content indicated in the user-specific setting 44b. That is, in the above state, the first user may use the shared operation button 62 having the resolution of "300", and the second user may use the shared operation button 62 having the resolution of "400". When the second user sends a change instruction to return a setting of the resolution associated with the shared operation button 62 to "400" to the document management server 14, the button setting change unit 50 changes the resolution in the shared setting 44a to "400", and stores a user ID of the second user as a changed user in the button setting DB 44, but the resolution in the user-specific setting 44b 1 of the first user is maintained at "300" (the resolution in the user-specific setting 44b2 of the second user is the original "400", so the resolution is not changed).

As described above, in the present exemplary embodiment, the shared setting 44a is changed only when there is an instruction to change the setting content of the shared operation button 62 from any user. However, in the above-described example, when the second user does not reflect the setting content of the shared operation button 62 of the first user in the shared operation button 62 of the second user, the setting content of the shared setting 44a may be changed (return to the state before the change by the first user) in response to the fact.

In addition, the button setting change unit 50 stores the user ID of the user (the first user in the present example) who changes the setting content of the shared operation button 62 in the button setting DB 44. Further, when the user changes the setting content of the shared operation button 62, the button setting change unit 50 stores information indicating the electronic document to be processed by the user in the button setting DB 44. The electronic document to be processed is, for example, an electronic document whose thumbnail T is displayed in the document management window 60 when the setting content of the shared operation button 62 is changed. In addition, information indicating the electronic document is not limited thereto, but is a file name, a size (capacity), an extension, or the like of the electronic document.

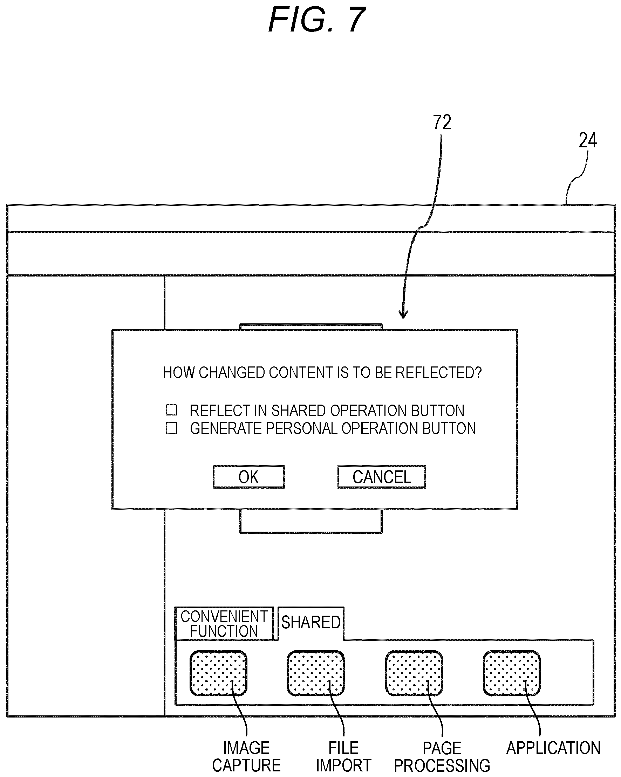

In addition, by duplicating the shared operation button 62 and changing the setting content of the duplicated shared operation button 62 in accordance with an instruction from a user, the button setting change unit 50 may generate a personal operation button as a personal operation element dedicated to the user. For example, when the user inputs a changed content of the shared operation button 62 in the setting content change window 70 (see Fig. 5) and operates the OK button, the button setting change unit 50 inquires of the user whether the change instruction is an instruction related to the shared operation button 62 or an instruction to generate a personal operation button. Specifically, the button setting change unit 50 displays a change method instruction window 72 as shown in Fig. 7 on the display 24 of the user terminal 12 of the user. When the user selects reflection on the shared operation button 62 in the change method instruction window 72, the button setting change unit 50 changes the setting content of the shared operation button 62 in accordance with the input change instruction. On the other hand, when the user selects to generate a personal operation button in the change method instruction window 72, the button setting change unit 50 generates a personal operation button dedicated to the user having the setting content indicated by the input change instruction.

The button setting change unit 50 stores the generated setting content of the user-dedicated personal operation button in the button setting DB 44 in association with the user ID of the user and the button ID of the shared operation button 62 that is a generation source of the personal operation button.

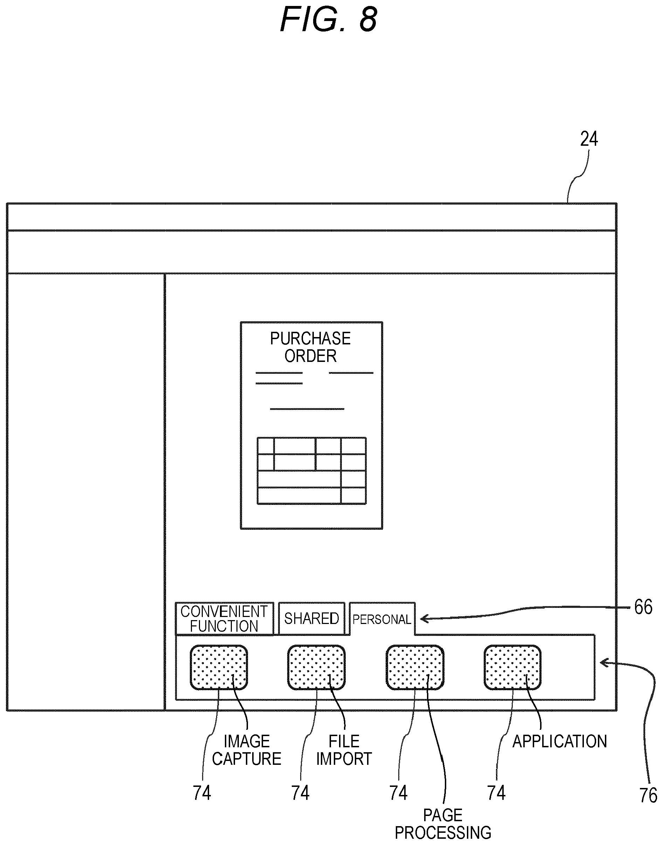

The generated personal operation button is displayed on the display 24 of the user terminal 12 by the service provider 48. Fig. 8 is a diagram showing an example in which a personal operation button 74 is displayed on the display 24 of the user terminal 12. Since the personal operation button 74 is dedicated to the user who issues the generation instruction, the personal operation button 74 is not shared by plural users. Therefore, even if the personal operation button 74 is not suitable for another user, it is possible to set the setting content suitable for the user (in other words, unique to the user).

As shown in Fig. 8, in the present exemplary embodiment, the personal operation button 74 is included in a personal toolbar 76 dedicated to the user and displayed. In the present exemplary embodiment, the personal toolbar 76 is incorporated as one tab 66 among tabbed toolbars having plural tabs 66 including the tab 66 of the shared toolbar 64. Obviously, a display mode of the personal operation button 74 and the personal toolbar 76 is not limited thereto.

Hereinafter, the present exemplary embodiment will be described with reference to an example in which the first user changes the resolution associated with the shared operation button A from "400" to "300" and then the second user uses the shared operation button A.

When the second user uses the shared operation button A after the button setting change unit 50 receives an instruction to change the setting content of the shared operation button A from the first user, the notification processing unit 52 notifies the second user that the setting content of the shared operation button A is changed by the first user and the setting content of the shared operation button A changed by the first user.

As described above, when the above-described change of the setting content of the shared operation button A from the first user is received, the button setting change unit 50 sets the resolution associated with the shared operation button A of the shared setting 44a after the change as first setting information to "300", and maintains the resolution associated with the shared operation button A of the user-specific setting 44b of the second user as second setting information to "400". When the second user uses the shared operation button A, specifically, when the service provider 48 displays the shared operation button A on the display 24 of the user terminal 12 used by the second user, the notification processing unit 52 refers to the button setting DB 44 and compares the setting content of the shared operation button A in the shared setting 44a with the setting content of the shared operation button A in the user-specific setting 44b of the second user. When the setting content of the shared setting 44a is different from the setting content of the user-specific setting 44b of the second user, the notification processing unit 52 notifies the second user of the setting content indicated by the shared setting 44a.

Here, the notification processing unit 52 may notify the second user of all setting contents indicated by the shared setting 44a, but may notify the second user of only a difference between the setting content of the shared setting 44a and the setting content of the user-specific setting 44b of the second user. The difference is a portion changed by the first user.

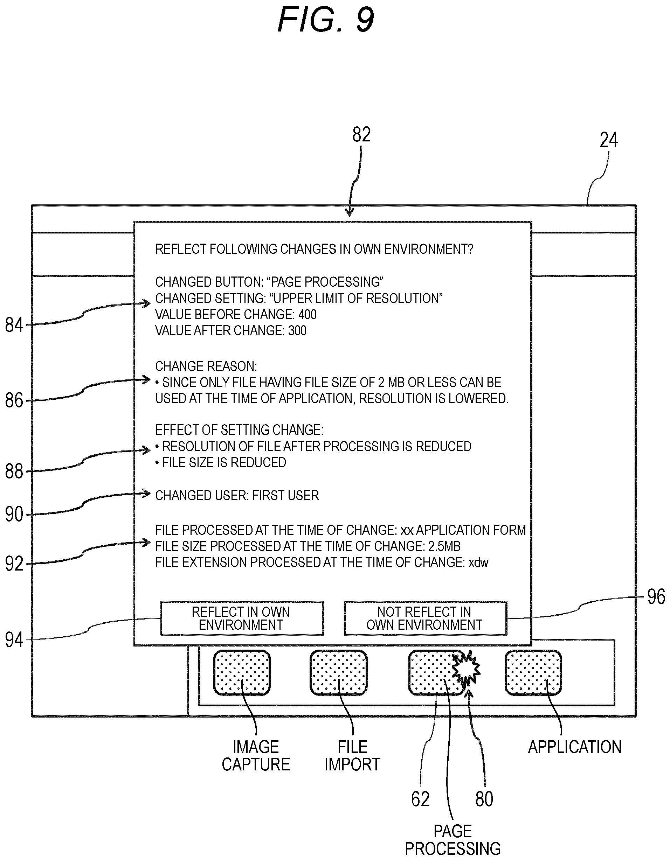

Fig. 9 is a diagram showing a specific example of notification to the second user. The notification processing unit 52 first highlights the shared operation button 62 (shared operation button A) whose setting content is changed. In the present exemplary embodiment, as shown in Fig. 9, a change notification icon 80 is displayed in the vicinity of the shared operation button 62 (shared operation button A) whose setting content is changed by the first user. Obviously, as long as the shared operation button A whose setting content is changed and the shared operation button 62 other than the shared operation button A may be identified, the highlighting may be performed in any manner. Accordingly, the second user may easily grasp that the setting content of the shared operation button 62 is changed by another user. In addition, even when there are plural shared operation buttons 62, the second user may easily identify the shared operation button A whose setting content is changed by another user.

In addition, the notification processing unit 52 displays a setting content change notification window 82 on the display 24 of the user terminal 12 used by the second user. The setting content change notification window 82 includes a changed content information 84 indicating the changed content that is the setting content of the shared operation button 62 changed by the first user. As described above, the changed content may be acquired from the difference between the setting content of the shared setting 44a and the setting content of the user-specific setting 44b of the second user. Since the notification processing unit 52 notifies the second user of the changed content information 84, the second user may easily grasp a changed content of a setting of the shared operation button A by another user (the first user in the present example).

The setting content change notification window 82 may include change reason information 86 indicating a change reason that is a reason for the first user changing the setting content of the shared operation button 62. Since the notification processing unit 52 notifies the second user of the change reason information 86, the second user may easily grasp the reason why the first user changes the setting content of the shared operation button A.

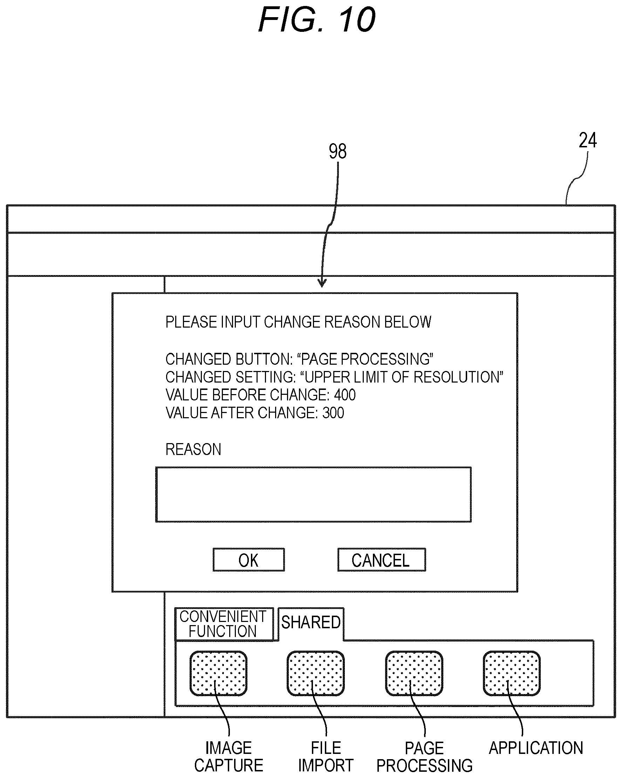

The notification processing unit 52 acquires the reason why the first user changes the setting content of the shared operation button A by receiving the reason from the first user. Specifically, when the first user inputs the changed content of the shared operation button A in the setting content change window 70 (see Fig. 5) and operates the OK button, the notification processing unit 52 displays a reason input window 98 as shown in Fig. 10 on the display 24 of the user terminal 12 used by the first user. In the reason input window 98, a reason why the first user changes the setting content of the shared operation button A may be input. When the first user operates an OK button in which the change reason is input in the reason input window 98, the change reason is transmitted to the notification processing unit 52.

The setting content change notification window 82 may include effect information 88 indicating an effect of the first user changing the setting content of the shared operation button 62. Since the notification processing unit 52 notifies the second user of the effect information 88, the second user may easily grasp the effect due to the change of the setting content of the shared operation button A by another user.

The notification processing unit 52 may specify the effect of the change of the setting content of the shared operation button A based on the changed content of the change. For example, when the changed content is to reduce a resolution of image data after page processing, the notification processing unit 52 may specify the effect such as "resolution of file after processing is reduced" or "file size is reduced" as the effect. In addition, the notification processing unit 52 may acquire the effect by receiving the effect due to the change of the setting content of the shared operation button A from the first user.

In addition, the setting content change notification window 82 may include user information 90 indicating a user (the first user in the present example) who changes the setting content of the shared operation button 62. Since the notification processing unit 52 notifies the second user of the user information 90, the second user may easily grasp the user who changes the setting content of the shared operation button A. As described above, since the button setting change unit 50 stores a user ID of a user who changes the setting content of the shared operation button A in the button setting DB 44, the notification processing unit 52 may acquire the user information 90 by referring to the button setting DB 44.

Further, the setting content change notification window 82 may include processing target document information 92 that is information related to an electronic document to be processed by the first user when the first user changes the setting content of the shared operation button 62. Since the notification processing unit 52 notifies the second user of the processing target document information 92, the second user may easily grasp a content of the electronic document to be processed when the first user changes the setting content of the shared operation button A. As described above, when the first user changes the setting content of the shared operation button A, the button setting change unit 50 stores the information indicating the electronic document to be processed by the first user in the button setting DB 44, and thus the notification processing unit 52 may acquire the processing target document information 92 by referring to the button setting DB 44.

The setting content change notification window 82 includes a reflection button 94 and a non-reflection button 96. By including the reflection button 94 and the non-reflection button 96 in the setting content change notification window 82, the notification processing unit 52 may inquire of the second user whether to reflect the change of the setting content of the shared operation button A by another user in the shared operation button A of the second user.

The second user may determine whether to reflect the change of the setting content of the shared operation button A by another user (the first user in the present example) in the shared operation button A of the second user, based on the changed content information 84 or the change reason information 86, the effect information 88, the user information 90, and the processing target document information 92 shown in the setting content change notification window 82. When the setting content of the changed shared operation button A is to be reflected in the shared operation button A of the second user, the reflection button 94 is operated, and when the setting content of the changed shared operation button A is not to be reflected in the shared operation button A of the second user, the non-reflection button 96 is operated.

By the operation of the reflection button 94 or the non-reflection button 96 by the second user, the button setting change unit 50 receives a selection as to whether to reflect the setting content of the shared operation button A changed by the first user in the setting of the shared operation button A of the second user. When the second user operates the reflection button 94, the button setting change unit 50 changes the resolution in the user-specific setting 44b2 of the second user from "400" to "300" in the button setting DB 44 in response to the operation. When the second user operates the non-reflection button 96, as described above, the button setting change unit 50 maintains the resolutions of the shared setting 44a and the user-specific setting 44b 1 of the first user at "300" and maintains the resolution in the user-specific setting 44b2 of the second user at "400" in the button setting DB 44.

When the second user operates the non-reflection button 96, the setting content of the shared operation button A in the shared setting 44a and the setting content of the shared operation button A in the user-specific setting 44b of the second user are maintained to be different from each other. In this case, every time the second user uses the shared operation button A, a notification is performed by the notification processing unit 52 (in the present exemplary embodiment, the setting content change notification window 82 is displayed).

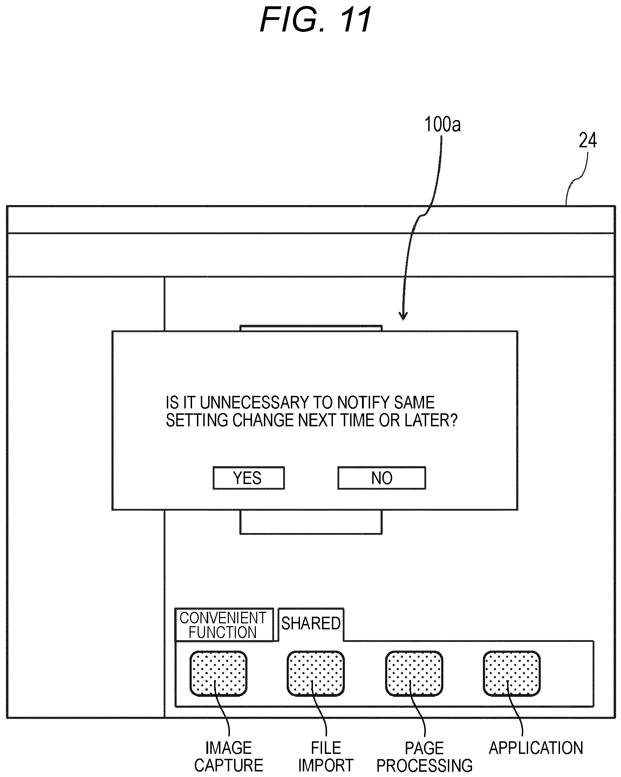

Therefore, when the second user operates the non-reflection button 96, the notification processing unit 52 may inquire of the second user about necessity of future notification. Specifically, the notification processing unit 52 may cause the user terminal 12 used by the second user to display a notification necessity confirmation window 100a as shown in Fig. 11 on the display 24. The notification necessity confirmation window 100a inquires of the second user whether to perform a notification of the same content (in the present example, a change in which the resolution associated with the shared operation button A is set to "300") as the changed content of a current shared operation button 62 in the future.

When the second user operates a "YES" button in the notification necessity confirmation window 100a, thereafter, the notification processing unit 52 does not notify the second user even when the resolution associated with the shared operation button A in the shared setting 44a is "300" and the resolution associated with the shared operation button A in the user-specific setting 44b of the second user is other than "300". When the second user operates a "NO" button, thereafter, the notification processing unit 52 notifies the second user when the setting content of the shared operation button A in the shared setting 44a is different from the setting content of the shared operation button A in the user-specific setting 44b of the second user as usual. For example, the second user wants to maintain the resolution associated with the shared operation button A at "400" this time, but when there is a possibility that the second user wants to change the resolution to "300" in the future, the second user operates the "NO" button.

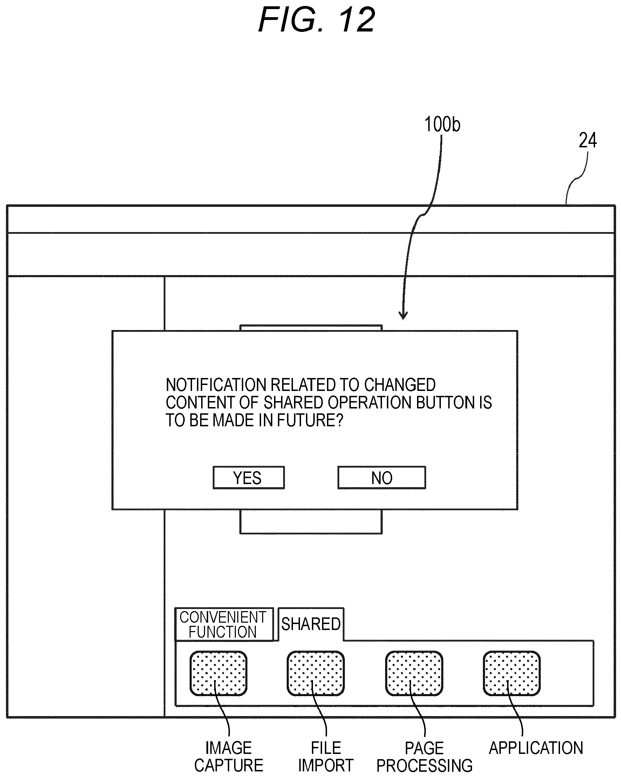

The notification processing unit 52 may display a notification necessity confirmation window 100b as shown in Fig. 12 instead of the notification necessity confirmation window 100a. The notification necessity confirmation window 100b inquires of the second user whether to notify the change of the setting content of the shared operation button A in the future.

When the second user operates a "NO" button in the notification necessity confirmation window 100b, thereafter, the notification processing unit 52 does not notify the second user even if the setting content of the shared operation button A in the shared setting 44a is different from the setting content of the shared operation button A in the user-specific setting 44b of the second user. However, the notification processing unit 52 notifies the second user of other shared operation buttons 62 when the shared setting 44a and the user-specific setting 44b of the second user are different from each other. For example, when the second user does not intend to use the shared setting for the shared operation button A and intends to generate and use the personal operation button 74 for the shared operation button A, the second user operates the "NO" button. When the second user operates a "YES" button, thereafter, the notification processing unit 52 notifies the second user when the setting content of the shared operation button A in the shared setting 44a is different from the setting content of the shared operation button A in the user-specific setting 44b of the second user as usual.

When the second user uses the shared operation button A after receiving the above-described change of the setting content of the shared operation button A from the first user, in a case where the setting content of the shared setting 44a is the same as the setting content of the user-specific setting 44b of the second user, the notification processing unit 52 does not notify the second user. A case where the setting content of the shared setting 44a is the same as the setting content of the user-specific setting 44b of the second user is, for example, a case where the first user changes the resolution associated with the shared operation button A from "400" to "300" and then the second user changes the resolution associated with the shared operation button A to "300" thus.

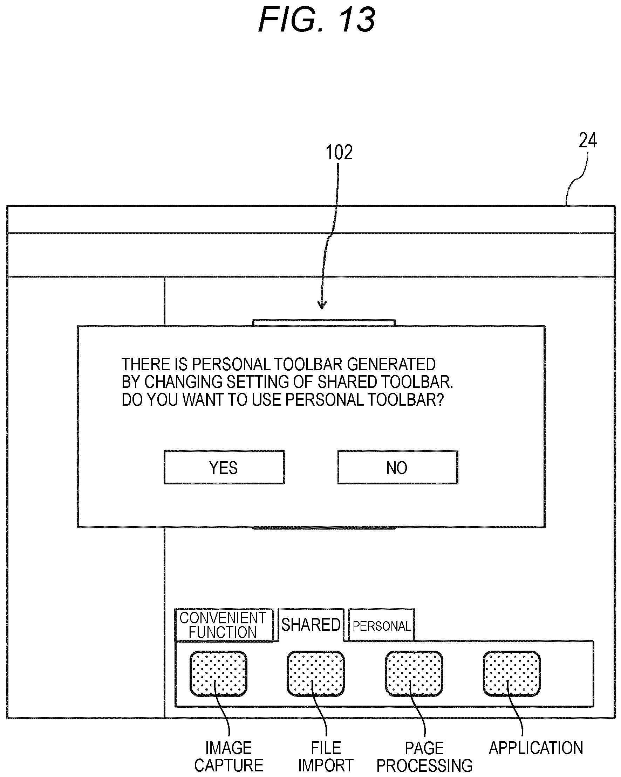

In addition, the notification processing unit 52 may notify the second user that the personal operation button 74 based on the shared operation button A is generated when the second user selects the use of the shared operation button A (for example, when the shared operation button A is displayed on the display 24) after the second user generates the personal operation button 74 based on the shared operation button A. For example, the notification processing unit 52 may display a personal operation button generation notification window 102 as shown in Fig. 13 on the display 24 of the user terminal 12 used by the second user. When the notification processing unit 52 performs the notification to the second user, the second user may notice that the personal operation button 74 based on the shared operation button A to be used is generated. When the second user operates a "YES" button in the personal operation button generation notification window 102, the service provider 48 displays the personal operation button 74 on the display 24, and when the second user operates a "NO" button, the service provider 48 maintains the display of the shared operation button A.

As described above, since the button setting change unit 50 stores the generated setting content of the user-dedicated personal operation button in the button setting DB 44 in association with the user ID of the user and the button ID of the shared operation button 62 that is the generation source of the personal operation button, the notification processing unit 52 may determine whether the second user generates the personal operation button 74 based on the shared operation button A by referring to the button setting DB 44.

In addition, when the changed setting content is not reflected in the setting of the shared operation button A of the second user after the first user changes the setting content of the shared operation button A, (when the second user does not accept the setting content of the shared operation button A), and thereafter, when the first user uses the shared operation button A again (for example, when the shared operation button A is displayed on the display 24), the notification processing unit 52 may notify the first user that the personal operation button 74 based on the shared operation button A may be generated.

The fact that, after the first user changes the setting content of the shared operation button A, the changed setting content is not reflected in the setting of the shared operation button A of the second user means that the shared operation button A having the changed setting content by the first user cannot be shared with another user (at least the second user). On the other hand, since the first user changes the setting content of the shared operation button A as described above, the first user would want to use the shared operation button A of the changed setting content. Therefore, in this case, it may be said that it is desirable for the first user to generate the personal operation button 74 having the same content as the shared operation button A having the changed setting content. As described above, the notification processing unit 52 notifies the first user in order to propose the first user to generate the personal operation button 74 based on the shared operation button A.

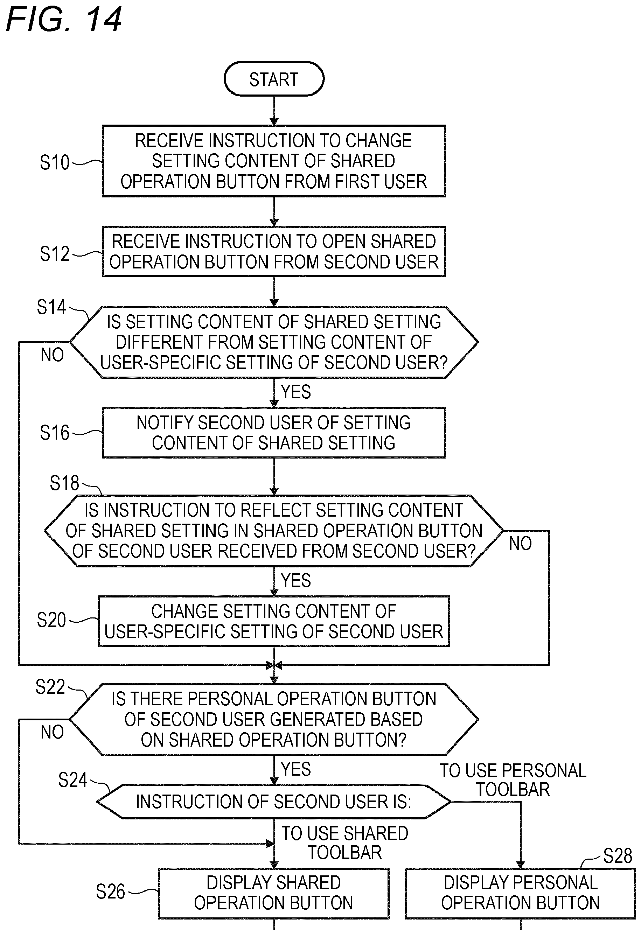

An outline of the document management server 14 according to the present exemplary embodiment is as described above. Hereinafter, a flow of a process of the document management server 14 will be described with reference to a flowchart shown in Fig. 14.

In step S10, the button setting change unit 50 receives an instruction to change the setting content of the shared operation button 62 from the first user. Here, it is also assumed that the button setting change unit 50 receives a change instruction to change the resolution associated with the shared operation button A from "400" to "300" from the first user. Based on the change instruction, the button setting change unit 50 changes the resolution associated with the shared operation button A in the shared setting 44a and the resolution associated with the shared operation button A in the user-specific setting 44b 1 of the first user in the button setting DB 44 from "400" to "300".

In step S12, the service provider 48 receives an instruction to open the shared operation button A from the second user, and displays the shared operation button A on the display 24 of the user terminal 12 used by the second user.

In step S14, the notification processing unit 52 refers to the button setting DB 44 and determines whether the setting content of the shared operation button A of the shared setting 44a is different from the setting content of the shared operation button A of the user-specific setting 44b2 of the second user. When the setting content of the shared operation button A of the shared setting 44a and the setting content of the shared operation button A of the user-specific setting 44b2 of the second user are different from each other, the process proceeds to step S16, and when they are not different from each other (that is, coincide with each other), the process proceeds to step S22 while bypassing processes from step S16 to step S20.

In step S16, the notification processing unit 52 notifies the setting content of the shared setting 44a, that is, the setting content of the shared operation button A changed by the first user. As described above, the difference between the setting content of the shared setting 44a and the setting content of the user-specific setting 44b2 of the second user, that is, only the portion of the setting content of the shared operation button 62 changed by the first user may be notified to the second user. In addition, as described above, the notification processing unit 52 may notify the second user of the changed content information 84 or each piece of information of the change reason information 86, the effect information 88, the user information 90, and the processing target document information 92.

In step S18, the notification processing unit 52 determines whether an instruction to reflect the setting content of the shared setting (that is, the setting content after the change by the first user) in the shared operation button A of the second user is received from the second user. When an instruction to reflect the information is received, the process proceeds to step S20, and when an instruction not to reflect the information is received, the process proceeds to step S22 while bypassing a process of step S20.

In step S20, the button setting change unit 50 changes the resolution associated with the shared operation button A in the user-specific setting 44b2 of the second user from "400" to "300".

In step S22, the notification processing unit 52 refers to the button setting DB 44 and determines whether there is the personal operation button 74 of the second user generated based on the shared operation button A. When the personal operation button 74 is present, the process proceeds to step S24, and if not, the process proceeds to step S26.

In step S24, the notification processing unit 52 displays the personal operation button generation notification window 102 (see Fig. 13) on the display 24 of the user terminal 12 used by the second user, and inquires of the second user whether to use the shared operation button A or the personal operation button 74.

When the second user gives instructions to use the shared operation button A, the process proceeds to step S26, and in step S26, the service provider 48 continues to display the shared operation button A.

When the second user gives instructions to use the personal operation button 74, the process proceeds to step S28, and in step S28, the service provider 48 displays the personal operation button 74 of the second user instead of the shared operation button A.

In the present exemplary embodiment, the button setting DB 44 is stored in the memory 42 of the document management server 14 (that is, a device that provides the shared operation button 62 to plural users), but the button setting DB 44 may be stored in a memory of another device accessible from the document management server 14.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An information processing apparatus, comprising:
a processor configured to
receive, from a first user, a change instruction to change a setting content of a shared operation element, the shared operation element being an operation element configured to process data and shared by a plurality of users including the first user and a second user different from the first user, and,
in a case where the second user uses the shared operation element after receiving the change instruction from the first user, notify the second user of a changed setting content of the shared operation element.

2. The information processing apparatus according to claim 1, wherein
the processor is configured to
receive, from the first user, a change reason why the setting content of the shared operation element is changed, and
notify the second user of the change reason together with the changed setting content of the shared operation element.

3. The information processing apparatus according to claim 1 or 2, wherein
the processor is configured to notify the second user of an effect of change of the setting content of the shared operation element together with the changed setting content of the shared operation element.

4. The information processing apparatus according to any one of claims 1 to 3, wherein,
when the second user uses the shared operation element and in a case where a setting content indicated by first setting information indicating the changed setting content of the shared operation element by the first user and a setting content indicated by second setting information indicating a setting content of the shared operation element at a time point when the second user uses the shared operation element immediately before are different from each other, the processor is configured to notify the second user of the setting content indicated by the first setting information based on the first information and the second information.

5. The information processing apparatus according to any one of claims 1 to 4, wherein,
when the second user uses the shared operation element after receiving the change instruction to change the setting content of the shared operation element from the first user, the processor is configured to receive a selection as to whether to reflect the setting content of the shared operation element changed by the first user in a setting of the shared operation element of the second user.

6. The information processing apparatus according to claim 1, wherein
the processor is configured to generate a personal operation element dedicated to the second user by generating a duplicated shared operation element from the shared operation element and changing a setting content of the duplicated shared operation element according to a change instruction from the second user.

7. The information processing apparatus according to claim 6, wherein
the processor is configured to notify the second user, in response to the shared operation element being selected to use by the second user after the personal operation element dedicated to the second user is generated, that the personal operation element is generated.

8. The information processing apparatus according to claim 6, wherein
in a case where the setting content of the shared operation element changed by the first user is not reflected in a setting of the shared operation element of the second user, the processor is configured to notify the first user, when the first user uses the shared operation element again, that a personal operation element is generatable.

9. An information processing program causing a computer to execute a process, the processing comprising:
receiving, from a first user, a change instruction to change a setting content of a shared operation element, a shared operation element being an operation element configured to process data and shared by a plurality of users including the first user and a second user different from the first user, and,
in a case where the second user uses the shared operation element after receiving the change instruction from the first user, notify the second user of a changed setting content of the shared operation element.
